# EUROPEAN PATENT APPLICATION

(11) **EP 4 600 612 A1**
(43) Date of publication of application: **13.08.2025**
(21) Application number: 24829354.0
(22) Date of filing: 14.11.2024
(51) Int. Cl.: G01D 5/20, G01D 5/12, G01B 7/00, H02K 24/00

(54) **ELECTROMAGNETIC STRUCTURE FOR ANGLE SENSOR AND ANGLE SENSOR**

(30) Priority: 27.12.2023 CN 202311812873
(71) Applicant: Fortior Technology (Shenzhen) Co., Ltd., Shenzhen, Guangdong 518000 (CN)
(72) Inventor: BI, Chao, Shenzhen Guangdong 518000 (CN); BI, Lei, Shenzhen Guangdong 518000 (CN)
(74) Representative: Osterhoff, Utz
(86) International application number: PCT/CN2024/132056
(87) International publication number: WO 2025/139441

(57) **Abstract**

Disclosed are an electromagnetic structure for an angle sensor and an angle sensor. The electromagnetic structure for the angle sensor includes: a stator assembly including a stator core and stator windings, the stator windings are provided on a side of the stator core, the stator windings include a stator excitation winding and a stator angle winding, the stator excitation winding and the stator angle winding are stacked, and the stator excitation winding is configured to connect an external power supply; a rotor assembly including a rotor core and rotor windings, the rotor windings are provided on a side of the rotor core, the rotor windings are located on the side of the stator windings away from the stator core, an air gap is formed between the stator windings and the rotor windings, the rotor windings include a rotor excitation winding and a rotor angle winding, the rotor excitation winding and the rotor angle winding are stacked, and the rotor excitation winding is electrically connected to the rotor angle winding.

## Description

This application claims priority to Chinese Patent Application No. 202311812873.8, filed on December 27, 2023, the entire content of which are incorporated herein by reference.

### TECHNICAL FIELD

The present application relates to the technical field of sensor devices, and in particular to an electromagnetic structure for an angle sensor and an angle sensor.

### BACKGROUND

For mobile systems such as cars and robots, it is necessary to use sensors with global effects, which can weaken the interference of mechanical vibration on the angle signal. However, in high-precision sensors, due to the large number of windings and complex electromagnetic structures, there are problems such as large size, difficulty in manufacturing and high cost. Generally, a brushless rotor winding structure is used to achieve angle detection because this structure has the advantages of simple maintenance and good reliability. Sensors with a brushless rotor winding structure have higher accuracy than reluctance resolvers that use air gap magnetic resistance changes for position detection. However, for sensors with the brushless rotor winding structure, because windings need to be installed on the rotor to generate a magnetic field related to the rotor position, it is necessary to use an additional toroidal transformer to transfer the excitation energy to the rotor, which causes the sensor to have a large size.

### SUMMARY

The main purpose of the present application is to propose an electromagnetic structure for an angle sensor, aiming to solve the problem of large size of existing sensors.

To achieve the above objectives, the electromagnetic structure for the angle sensor proposed in the present application includes:
a stator assembly including a stator core and stator windings, the stator windings are provided on a side of the stator core, and the stator windings include a stator excitation winding and a stator angle winding; and the stator excitation winding and the stator angle winding are stacked, and the stator excitation winding is configured to connect an external power supply; and
a rotor assembly including a rotor core and rotor windings, the rotor windings are provided on a side of the rotor core, and the rotor windings are located on a side of the stator winding away from the stator core; an air gap is formed between the stator windings and the rotor windings, and the rotor windings include a rotor excitation winding and a rotor angle winding; and the rotor excitation winding and the rotor angle winding are stacked, and the rotor excitation winding is electrically connected to the rotor angle winding.

In an embodiment, the stator excitation winding and the stator angle winding, and the rotor excitation winding and the rotor angle winding, are located in a same axial electromagnetic region but are provided on different layers of circuit boards; and/or
the stator angle winding includes a stator angle sine winding and a stator angle cosine winding, and a first angle difference is set between the stator angle sine winding and the stator angle cosine winding.

In an embodiment, the stator excitation winding includes a first excitation winding, a second excitation winding and a first circuit board; the first excitation winding and the second excitation winding are both provided on the first circuit board, and the first circuit board is provided with a first connection hole and a first electrical connection part; one end of the first excitation winding is connected to the first electrical connection part, and the other end of the first excitation winding is electrically connected to one end of the second excitation winding through the first connection hole; and the other end of the second excitation winding is connected to the first electrical connection part, and the first electrical connection part is configured to connect an external power supply.

In an embodiment, the stator angle sine winding includes a first angle winding, a second angle winding and a third circuit board, and the first angle winding and the second angle winding are both provided on the third circuit board; the third circuit board is provided with a third connection hole and a third electrical connection part, and the first angle winding is connected to the third electrical connection part; and the first angle winding is electrically connected to the second angle winding through the third connection hole, and the second angle winding is electrically connected to the third electrical connection part; and
the stator angle cosine winding includes a third angle winding, a fourth angle winding and a fifth circuit board, and the third angle winding and the fourth angle winding are both provided on a side surface of the fifth circuit board; the fifth circuit board is provided with a fourth connection hole and a fourth electrical connection part, and the third angle winding is connected to the fourth electrical connection part; and the third angle winding is electrically connected to the fourth angle winding through the fourth connection hole.

In an embodiment, the rotor excitation winding includes a third excitation winding, a fourth excitation winding and a seventh circuit board; the third excitation winding and the fourth excitation winding are both provided on the seventh circuit board, and the seventh circuit board is provided with a fifth connection hole and a fifth electrical connection part; one end of the third excitation winding is connected to the fifth electrical connection part, and the other end of the third excitation winding is electrically connected to one end of the fourth excitation winding through the fifth connection hole; and the other end of the fourth excitation winding is electrically connected to the fifth electrical connection part, and the fifth electrical connection part is electrically connected to the rotor angle winding.

In an embodiment, the rotor angle winding includes a fifth angle winding, a sixth angle winding and a ninth circuit board, and the fifth angle winding and the sixth angle winding are both provided on the ninth circuit board; the ninth circuit board is provided with a seventh connection hole and a seventh electrical connection part, and the fifth angle winding is connected to the seventh electrical connection part; and the fifth angle winding and the sixth angle winding are electrically connected to the sixth angle winding through the seventh connection hole.

In an embodiment, the electromagnetic structure for the angle sensor further includes:
M groups of stator excitation windings and N groups of stator angle windings, where M and N are both positive integers, a second angle difference is set between different stator angle windings; a third angle difference is set between the first angle winding and the second angle winding, and a fourth angle difference is set between the third angle winding and the fourth angle winding; and
P groups of rotor excitation windings and Q groups of rotor angle windings, where P and Q are both positive integers, a fifth angle difference is set between different rotor angle windings, and a sixth angle difference is set between the fifth angle winding and the sixth angle winding.

In an embodiment, the rotor core and the stator core are both made of ferromagnetic material with a magnetic permeability greater than 100.

In an embodiment, the stator excitation winding includes a ring-shaped winding surrounding from a center to an edge, and the stator angle winding and the rotor angle winding each include two semi-ring-shaped windings symmetrically provided around the center.

The present application also provides an angle sensor, including the electromagnetic structure for the angle sensor as described above.

In the technical solution of the present application, the stator core, stator excitation winding, stator angle winding, rotor excitation winding and rotor angle winding are stacked, and the air gap is formed between the stator winding and the rotor winding. The external power supply provides excitation current to the stator excitation winding, so that the stator excitation winding generates an alternating excitation magnetic field in the air gap. The alternating excitation magnetic field is connected to the rotor excitation winding through the stator core and the rotor core, and enables an induced potential to generate in the rotor excitation winding. However, due to the orthogonality of the electromagnetic structure between the excitation winding and the designed angle winding, even if they are located in the same area, no back electromotive force will be induced between each other. However, since the rotor excitation winding is connected to the rotor angle winding, an alternating current is generated in the rotor angle winding, and an alternating magnetic field is generated in the air gap. The alternating magnetic field causes the stator angle winding to generate an induced electromotive force. Since the excitation winding composed of the stator excitation winding and the rotor excitation winding and the angle winding composed of the stator angle winding and the rotor angle winding share an air gap in the same area, the electromagnetic structure is more compact, achieving the purpose of reducing the overall volume of the electromagnetic structure.

### BRIEF DESCRIPTION OF THE DRAWINGS

In order to illustrate the technical solutions in the embodiments of the present application or in the related art more clearly, accompanying drawings needed to be used in the description of the embodiments or the related art will be briefly described below. Obviously, the accompanying drawings in the following description are some embodiments of the present application. For those skilled in the art, other drawings can also be obtained based on structures shown in these drawings without creative efforts.
FIG. 1 is an internal schematic structural diagram of an electromagnetic structure for an angle sensor according to an embodiment of the present application.
FIG. 2 is a schematic structural diagram of the electromagnetic structure for the angle sensor according to an embodiment of the present application.
FIG. 3 is a schematic structural diagram of a stator excitation winding in the electromagnetic structure for the angle sensor according to an embodiment of the present application.
FIG. 4 is a schematic structural diagram of a stator angle winding in the electromagnetic structure for the angle sensor according to an embodiment of the present application.
FIG. 5 is a schematic structural diagram of a rotor excitation winding in the electromagnetic structure for the angle sensor according to an embodiment of the present application.
FIG. 6 is a schematic structural diagram of a rotor angle winding in the electromagnetic structure for the angle sensor according to an embodiment of the present application.
FIG. 7 is a schematic structural diagram of the rotor angle winding in the electromagnetic structure for the angle sensor according to another embodiment of the present application.

### Description of reference signs:

1- stator assembly; 11- stator core;
12- stator winding; 121- stator excitation winding;
1211- first excitation winding; 1212- second excitation winding;
1213- first circuit board; 12131- first connection hole;
12132- first electrical connection part; 1214- second circuit board;
12141- second connection hole; 12142- second electrical connection part;
122- stator angle winding; 1221- stator angle sine winding;
12211- first angle winding; 12212- second angle winding;
12213-third circuit board; 122131-third connection hole;
122132-third electrical connection part; 12214-fourth circuit board;
122141-eighth connection hole; 1222-stator angle cosine winding;
12221-third angle winding; 12222-fourth angle winding;
12223-fifth circuit board; 122231-fourth connection hole;
122232-fourth electrical connection part; 21124-sixth circuit board;
211241-ninth connection hole; 2-rotor assembly;
21-rotor core; 22-rotor winding;
221-rotor excitation winding; 2211-third excitation winding;
2212-fourth excitation winding; 2213-seventh circuit board;
22131-fifth connection hole; 22132-fifth electrical connection part;
2214-eighth circuit board; 22141-sixth connection hole;
22142sixth electrical connection part; 222-rotor angle winding;
2221-fifth angle winding; 2222-sixth angle winding;
2223-ninth circuit board; 22231-seventh connection hole;
22232-seventh electrical connection part; 2224-tenth circuit board;
22241-eleventh connection hole; 2225-seventh angle winding;
2226-eighth angle winding; 3-air gap;
4-magnetic lines of force of the excitation magnetic field.

The realization of the purpose, functional features and advantages of the present application will be further described in conjunction with the embodiments and with reference to the accompanying drawings.

### DETAILED DESCRIPTION OF THE EMBODIMENTS

The technical solutions in the embodiments of the present application will be clearly and completely described below with reference to the accompanying drawings. Obviously, the described embodiments are some rather than all of the embodiments of the present application. Based on the embodiments in the present application, all other embodiments obtained by those skilled in the art without creative efforts fall within the scope of the present application.

It should be noted that if the embodiments of the present application involve directional indications (such as up, down, left, right, front, back...), the directional indications are only used to explain the relative position relationship, movement status, etc. between the components in a certain specific posture. If the specific posture changes, the directional indications will also change accordingly.

In addition, if there are descriptions involving "first", "second", etc. in the embodiments of the present application, the descriptions of "first", "second", etc. are only used for descriptive purposes and cannot be understood as indicating or suggesting their relative importance or implicitly indicating the number of technical features indicated. Therefore, the features defined as "first" and "second" may explicitly or implicitly include at least one of the features. In addition, the meaning of "and/or" or "and/or" in the full text includes three parallel solutions. Taking "A and/or B" as an example, it includes solution A, or solution B, or a solution that satisfies both A and B. In addition, the technical solutions between the various embodiments can be combined with each other, but they must be based on the fact that they can be implemented by those skilled in the art. When the combination of technical solutions is contradictory or cannot be implemented, it should be deemed that such a combination of technical solutions does not exist and is not within the scope of the present application.

The present application proposes an electromagnetic structure for an angle sensor.

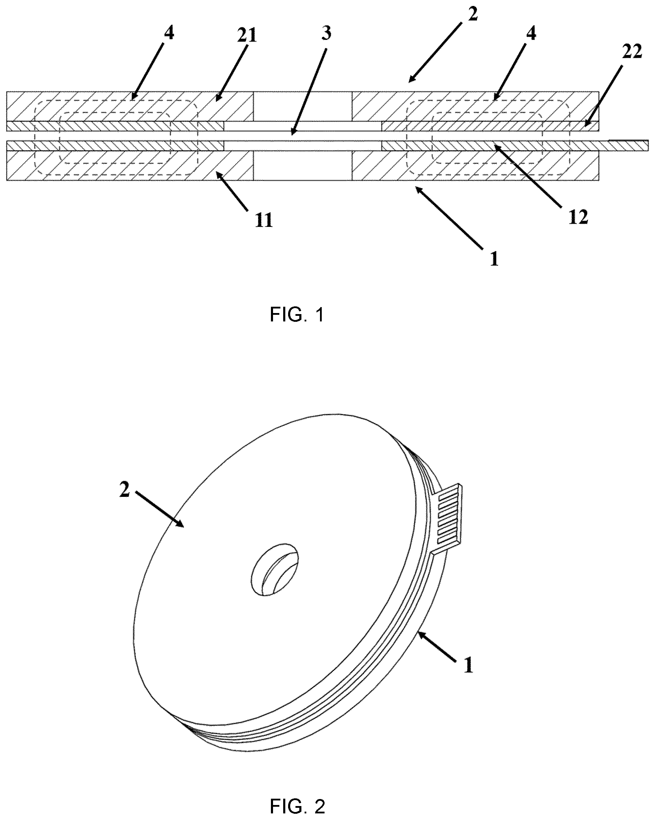

Referring to FIG. 1 to FIG. 7, in an embodiment of the present application, the electromagnetic structure for the angle sensor includes a stator assembly 1 and a rotor assembly 2. The stator assembly 1 includes a stator core 11 and stator windings 12, and the stator windings 12 are provided on one side of the stator core 11. The stator windings 12 include a stator excitation winding 121 and a stator angle winding 122, and the stator excitation winding 121 and the stator angle winding 122 are stacked. The stator excitation winding 121 is used to connect an external power supply. The rotor assembly 2 includes a rotor core 21 and rotor windings 22, and the rotor windings 22 are provided on one side of the rotor core 21 and provided on the side of the stator windings 12 away from the stator core 11. An air gap 3 is formed between the stator windings 12 and the rotor windings 22. The rotor windings 22 include a rotor excitation winding 221 and a rotor angle winding 222. The rotor excitation winding 221 and the rotor angle winding 222 are stacked and electrically connected.

The stator core 11, the stator excitation winding 121, the stator angle winding 122, the rotor excitation winding 221 and the rotor angle winding 222 are stacked; the air gap 3 is formed between the stator windings 12 and the rotor windings 22, and the external power supply provides an excitation current to the stator excitation winding 121, so that the stator excitation winding 121 generates an alternating excitation magnetic field in the air gap 3. The alternating excitation magnetic field is connected to the rotor excitation winding 221 through the stator core 11 and the rotor core 21, and an induced potential is generated on the rotor excitation winding 221. Since the rotor excitation winding 221 is connected to the rotor angle winding 222, an alternating current is generated in the rotor angle winding 222, and an alternating magnetic field is generated in the air gap 3. The alternating magnetic field causes the stator angle winding 122 to generate an induced potential. Since the excitation winding composed of the stator excitation winding 121 and the rotor excitation winding 221 and the angle winding composed of the stator angle winding 122 and the rotor angle winding 222 share the air gap 3 in one area, the electromagnetic structure for the angle sensor is more compact, achieving the purpose of reducing the overall volume of the electromagnetic structure for the angle sensor.

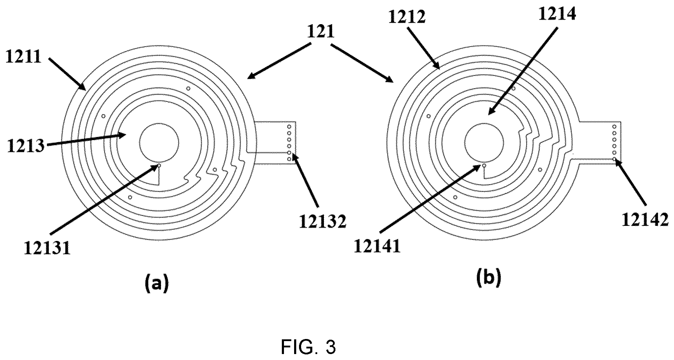

In an embodiment, referring to FIG. 3 to FIG. 6, the stator excitation winding 121 and the stator angle winding 122, and the rotor excitation winding 221 and the rotor angle winding 222 are provided on different layers of circuit boards.

In the above structure, the stator core 11, the stator excitation winding 121, the stator angle winding 122, the rotor excitation winding 221 and the rotor angle winding 222 are all stacked and generate an axial excitation magnetic field and an alternating magnetic field. The stator excitation winding 121, the stator angle winding 122, the rotor excitation winding 221 and the rotor angle winding 222 can be provided on different layers of circuit boards, so that the stator excitation winding 121, the stator angle winding 122, the rotor excitation winding 221 and the rotor angle winding 222 can be accurately realized, thereby improving the structural accuracy of the electromagnetic structure. When the electromagnetic structure is used in a sensor, it can also improve the measurement accuracy of the sensor.

Due to the orthogonal characteristics of the excitation magnetic field, the excitation magnetic field cannot induce a back electromotive force in the stator angle winding 122 and the rotor angle winding 222. Therefore, the excitation winding composed of the stator excitation winding 121 and the rotor excitation winding 221, and the angle winding composed of the stator angle winding 122 and the rotor angle winding 222, do not interfere with each other. In other words, the equivalent magnetic pole pairs of the stator excitation winding 121 and the rotor excitation winding 221 in the tangential direction are 0, but the magnetic pole pairs in the radial direction are 1. Therefore, the excitation magnetic field cannot induce a back electromotive force in the stator angle winding 122 and the rotor angle winding 222. It should be noted that the axial direction is perpendicular to the stator core 11, the stator excitation winding 121, the stator angle winding 122, the rotor excitation winding 221 and the rotor angle winding 222. The radial direction refers to the direction that is consistent with or opposite to the radial direction of the orbital trajectory of the stator core 11, the stator excitation winding 121, the stator angle winding 122, the rotor excitation winding 221 and the rotor angle winding 222. The tangential direction refers to the direction that is consistent with the tangent direction of the orbital curve trajectory of the stator core 11, the stator excitation winding 121, the stator angle winding 122, the rotor excitation winding 221 and the rotor angle winding 222.

In an embodiment, the rotor excitation winding 221 is electrically connected to the rotor angle winding 222. The rotor angle winding 222 receives the excitation current provided by the rotor excitation winding 221, and generates an axial alternating magnetic field related to the rotor angle information in the air gap 3, that is, the axial alternating magnetic field mentioned above. The axial alternating magnetic field is connected to the stator angle sine winding 1221 and the stator angle cosine winding 1222. Therefore, the back electromotive force in the rotor excitation winding 221 will generate an alternating current in the rotor angle winding 222, and when the electromagnetic structure for the angle sensor is applied to the sensor, the rotor angle winding 222 generates the alternating magnetic field with a tangential magnetic pole pair number of 1. The alternating magnetic field generated by the rotor angle winding 222 in the tangential direction has a magnetic pole pair number of 1. Since the alternating magnetic field is orthogonal to the excitation magnetic field, they do not interfere with each other. However, the alternating magnetic field of a pair of magnetic poles generated by the rotor angle winding 222 can effectively form a connection with the stator angle sine winding 1221 and the stator angle cosine winding 1222, which also have a magnetic pole pair number of 1, and generate an induced potential related to the rotor angle position in the stator angle sine winding 1221 and the stator angle cosine winding 1222.

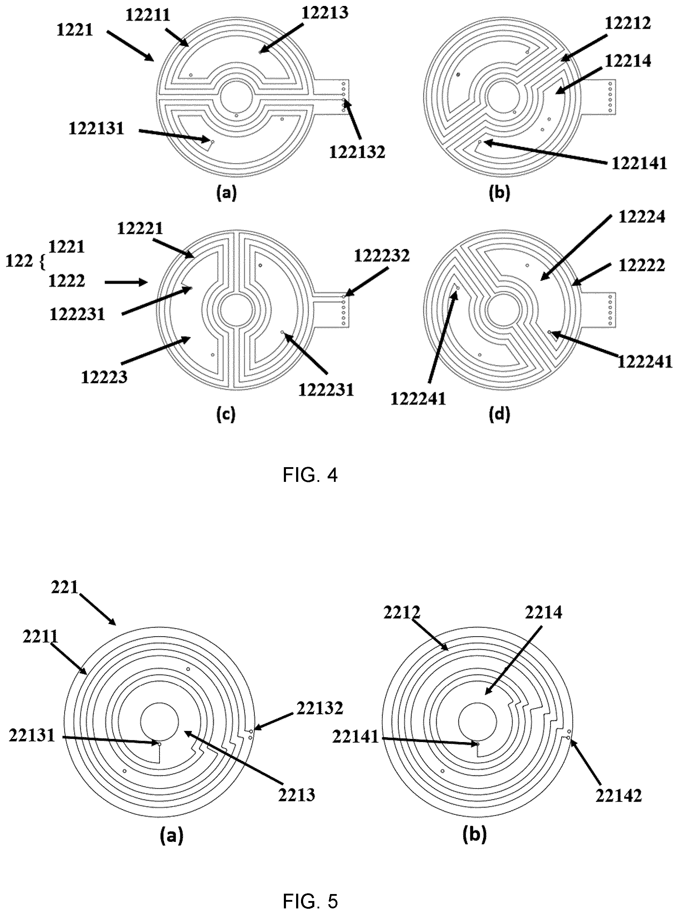

In an embodiment, referring to FIG. 4, the stator angle winding 122 includes a stator angle sine winding 1221 and a stator angle cosine winding 1222, and an electrical angle potential difference is provided between the stator angle sine winding 1221 and the stator angle cosine winding 1222.

In the above structure, the amplitude of the back electromotive force generated by the stator angle sine winding 1221 is in a sinusoidal relationship with the amplitude of the back electromotive force generated by the rotor angle winding 222, and the amplitude of the back electromotive force generated by the stator angle cosine winding 1222 is in a sinusoidal relationship with the amplitude of the back electromotive force generated by the rotor angle winding 222. This relationship can be used to detect the angle of the rotor assembly 2 with high precision. If the ends of the stator angle sine winding 1221 and the stator angle cosine winding 1222 are connected to an external circuit, the back electromotive force signals of the two windings can be analyzed, and then the rotation angle of the rotor assembly 2 can be calculated.

Referring to FIG. 3, the stator excitation winding 121 includes a first excitation winding 1211 (a in FIG. 3), a second excitation winding 1212 (b in FIG. 3), and a first circuit board 1213. The first excitation winding 1211 and the second excitation winding 1212 are both provided on the first circuit board 1213. The first circuit board 1213 is provided with a first connection hole 12131 and a first electrical connection part 12132. One end of the first excitation winding 1211 is connected to the first electrical connection part 12132, and the other end of the first excitation winding 1211 is electrically connected to one end of the second excitation winding 1212 through the first connection hole 12131. The other end of the second excitation winding 1212 is electrically connected to the first electrical connection part 12132. The first electrical connection part 12132 is used to connect an external power supply. The first excitation winding 1211 and the second excitation winding 1212 are provided on the first circuit board 1213 by printing.

In an embodiment, referring to FIG. 3, the stator excitation winding 121 includes a first excitation winding 1211 (a in FIG. 3), a second excitation winding 1212 (b in FIG. 3), a first circuit board 1213 and a second circuit board 1214. The first excitation winding 1211 is provided on a side surface of the first circuit board 1213. The first circuit board 1213 is provided with a first connection hole 12131 and a first electrical connection part 12132. One end of the first excitation winding 1211 is connected to the first electrical connection part 12132. The second circuit board 1214 is located on the side of the first circuit board 1213. The second excitation winding 1212 is provided on the side surface of the second circuit board 1214. The second circuit board 1214 is provided with a second connection hole 12141 and a second electrical connection part 12142. The other end of the first excitation winding 1211 is electrically connected to one end of the second excitation winding 1212 through the first connection hole 12131 and the second connection hole 12141. The other end of the second excitation winding 1212 is connected to the second electrical connection part 12142. The first electrical connection part 12132 and the second electrical connection part 12142 are used to connect an external power supply.

The first excitation winding 1211 is printed on the first circuit board 1213, and the second excitation winding 1212 is printed on the second circuit board 1214. One end of the first excitation winding 1211 passes through the first connection hole 12131 to connect with the second excitation winding 1212. The arc-shaped conductor with the largest radius gradually transitions to the arc-shaped conductor with the smallest radius, and the arc-shaped conduction is concentrated in the area between the inner hole and the outer periphery of the first circuit board 1213 to maximize the generation of an effective excitation magnetic field in the area. The second circuit board 1214 is provided with a second connection hole 12141, which is located on the arc-shaped conductor path with the smallest radius, so that one end of the first excitation winding 1211 passes through the first connection hole 12131 and then passes through the second connection hole 12141 to connect with the second excitation winding 1212. In addition, one end of the first excitation winding 1211 is connected to one end of the second excitation winding 1212, and the other end of the first excitation winding 1211 is connected to the first electrical connection part 12132. The other end of the second excitation winding 1212 is connected to the second electrical connection part 12142, and the first electrical connection part 12132 and the second electrical connection part 12142 are respectively connected to the external power supply. In addition, the first excitation winding 1211 is connected in series or in parallel to the second excitation winding 1212; the magnetic fields generated by the first excitation winding 1211 and the second excitation winding 1212 are both axial magnetic fields, and the two excitation magnetic fields have a mutually reinforcing relationship.

In an embodiment, referring to FIG. 3 to FIG. 6, the stator excitation winding 121 includes an annular winding that wraps from the center to the edge, and each of the stator angle winding 122 and the rotor angle winding 222 includes two semi-annular windings that are symmetrically provided with respect to the center.

The first excitation winding 1211 and the second excitation winding 1212 are both composed of multiple arc-shape wires, which gradually transition from the arc-shape wire with the largest radius to the arc-shape wire with the smallest radius. The first connection hole 12131 is provided on the first circuit board 1213, and the second connection hole 12141 is provided on the second circuit board 1214. The first connection hole 12131 is located on the arc-shape wire path with the smallest radius of the first excitation winding 1211, and the second connection hole 12141 is located on the arc-shape wire path with the smallest radius of the second excitation winding 1212. One end of the first excitation winding 1211 passes through the first connection hole 12131 and the second connection hole 12141 to be electrically connected to the second excitation winding 1212.

In an embodiment, the stator angle sine winding 1221 includes a first angle winding 12211 (a in FIG. 4), a second angle winding 12212 (b in FIG. 4), and a third circuit board 12213. The first angle winding 12211 is provided on the third circuit board 12213. The third circuit board 12213 is provided with a third connection hole 122131 and a third electrical connection part 122132. The first angle winding 12211 is connected to the third electrical connection part 122132. The first angle winding 12211 is electrically connected to the second angle winding 12212 through the third connection hole 122131. The first angle winding 12211 and the second angle winding 12212 are both stacked on the side surface of the third circuit board 12213 by printing, or are printed on both side surfaces of the third circuit board 12213 respectively.

In an embodiment, referring to FIG. 4, the stator angle sine winding 1221 includes a first angle winding 12211 (a in FIG. 4), a second angle winding 12212 (b in FIG. 4), a third circuit board 12213 and a fourth circuit board 12214. The first angle winding 12211 is provided on the side surface of the third circuit board 12213. The third circuit board 12213 is provided with a third connection hole 122131 and a third electrical connection part 122132. The first angle winding 12211 is connected to the third electrical connection part 122132. The fourth circuit board 12214 is located on one side of the third circuit board 12213, and the second angle winding 12212 is provided on the side surface of the fourth circuit board 12214. The fourth circuit board 12214 is provided with an eighth connection hole 122141, the first angle winding 12211 is electrically connected to the second angle winding 12212 through the third connection hole 122131 and the eighth connection hole 122141, and the second angle winding 12212 is electrically connected to the third electrical connection part 122132.

The electromagnetic structure for the angle sensor can include multiple groups of stator excitation windings 121, multiple groups of stator angle windings 122, multiple groups of rotor excitation windings 221, and multiple groups of rotor angle windings 222. The stator angle sine winding 1221 is composed of a concentrated winding or a traveling wave winding with a pole pair number of 1. The first angle winding 12211 is connected to the second angle winding 12212 through the third connection hole 122131. The third electrical connection part 122132 includes a first input end and a first output end, the first input end is electrically connected to the first angle winding 12211, and the first output end is electrically connected to the second angle winding 12212.

The first angle winding 12211 is printed on the third circuit board 12213, and the second angle winding 12212 is printed on the second circuit board 1214. The first excitation winding 1211 is composed of multiple segments of semi-arc wires, which gradually transition from the arc wire with the largest radius to the arc wire with the smallest radius. The first circuit board 1213 is provided with the first connection hole 12131, the first connection hole 12131 is located on the arc wire path with the smallest radius. One end of the first excitation winding 1211 passes through the first connection hole 12131 and is electrically connected to the second excitation winding 1212. When the number of magnetic pole pairs of the stator angle sine winding 1221 in the tangential direction is 1, the electromagnetic structure for the angle sensor can be used in the sensor to detect the angle. When the number of magnetic pole pairs of the stator angle sine winding 1221 is a positive integer greater than 1, the electromagnetic structure for the angle sensor can be used in the sensor to detect the incremental angle.

The stator angle cosine winding 1222 includes a third angle winding 12221 (c in FIG. 4), a fourth angle winding 12222 (d in FIG. 4) and a fifth circuit board 12223. The third angle winding 12221 is provided on the side surface of the fifth circuit board 12223. The fifth circuit board 12223 is provided with a fourth connection hole 122231 and a fourth electrical connection part 122232. The third angle winding 12221 is connected to the fourth electrical connection part 122232. The third angle winding 12221 is electrically connected to the fourth angle winding 12222 through the fourth connection hole 122231. The third angle winding 12221 (c in FIG. 4) and the fourth angle winding 12222 (d in FIG. 4) are provided on the side surface of the fifth circuit board 12223, or are printed on both side surfaces of the fifth circuit board 12223, respectively.

In an embodiment, referring to FIG. 4, the stator angle cosine winding 1222 includes the third angle winding 12221 (c in FIG. 4 ), the fourth angle winding 12222 (d in FIG. 4), the fifth circuit board 12223 and a sixth circuit board 21124. The third angle winding 12221 is provided on the side surface of the fifth circuit board 12223. The fifth circuit board 12223 is provided with a fourth connection hole 122231 and a fourth electrical connection part 122232. The third angle winding 12221 is connected to the fourth electrical connection part 122232. The sixth circuit board 21124 is located on one side of the fifth circuit board 12223, and the fourth angle winding 12222 is provided on the side surface of the fifth circuit board 12223. The sixth circuit board 21124 is provided with a ninth connection hole 211241, and the third angle winding 12221 is electrically connected to the fourth angle winding 12222 through the fourth connection hole 122231 and the ninth connection hole 211241.

The third angle winding 12221 is printed on the fifth circuit board 12223, and the fourth angle winding 12222 is printed on the sixth circuit board 21124. The third excitation winding 2211 is composed of multiple sections of semi-arc wires, which gradually transition from the semi-arc wire with the largest radius to the semi-arc wire with the smallest radius. The fifth circuit board 12223 is provided with a fourth connection hole 122231, and the fourth connection hole 122231 is located on the path of the semi-arc wire with the smallest radius. One end of the third excitation winding 2211 passes through the fourth connection hole 122231 and is electrically connected to the fourth excitation winding 2212. When the number of magnetic pole pairs of the stator angle cosine winding 1222 in the tangential direction is equal to the number of magnetic pole pairs of the stator angle sine winding 1221. There is an electrical angle difference of 90° between the stator angle sine winding 1221 and the stator angle cosine winding 1222. A fourth angle difference is set between the third angle winding 12221 and the fourth angle winding 12222, and the size of the fourth angle difference is determined by the number of higher harmonics to be eliminated in the overall back electromotive force.

The stator angle winding 122 can be configured as a 180° full-pitch winding, a wave winding or a fractional-slot concentrated winding, resulting in a winding structure with a tangential pole pair number of 1, and the stator angle winding 122 is provided on a circuit board.

In an embodiment, the rotor excitation winding 221 includes a third excitation winding 2211 (a in FIG. 5), a fourth excitation winding 2212 (b in FIG. 5) and a seventh circuit board 2213. The third excitation winding 2211 and the fourth excitation winding 2212 are both provided on the seventh circuit board 2213. The seventh circuit board 2213 is provided with a fifth connection hole 22131 and a fifth electrical connection part 22132. One end of the third excitation winding 2211 is connected to the fifth electrical connection part 22132; the other end of the third excitation winding 2211 is electrically connected to one end of the fourth excitation winding 2212 through the fifth connection hole 22131. The other end of the fourth excitation winding 2212 is connected to the fifth electrical connection part 22132, and the fifth electrical connection part 22132 is electrically connected to the rotor angle winding 222. The third excitation winding 2211 (a in FIG. 5) and the fourth excitation winding 2212 (b in FIG. 5) are provided on the side surface of the seventh circuit board 2213, or are printed on both side surfaces of the seventh circuit board 2213, respectively.

In an embodiment, referring to FIG. 5, the rotor excitation winding 221 includes the third excitation winding 2211 (a in FIG. 5), the fourth excitation winding 2212 (b in FIG. 5), the seventh circuit board 2213 and an eighth circuit board 2214. The third excitation winding 2211 is provided on the side surface of the seventh circuit board 2213. The seventh circuit board 2213 is provided with a fifth connection hole 22131 and a fifth electrical connection part 22132. One end of the third excitation winding 2211 is connected to the fifth electrical connection part 22132. The eighth circuit board 2214 is located on the side of the seventh circuit board 2213. The fourth excitation winding 2212 is provided on one side surface of the eighth circuit board 2214. The eighth circuit board 2214 is provided with a sixth connection hole 22141 and a sixth electrical connection part 22142. The other end of the third excitation winding 2211 is electrically connected to one end of the fourth excitation winding 2212 through the fifth connection hole 22131 and the sixth connection hole 22141. The other end of the fourth excitation winding 2212 is connected to the sixth electrical connection part 22142, and the sixth electrical connection part 22142 is electrically connected to the rotor angle winding 222.

The third excitation winding 2211 is printed on the seventh circuit board 2213, and the fourth excitation winding 2212 is printed on the eighth circuit board 2214. One end of the third excitation winding 2211 passes through the fifth connection hole 22131 and is connected to the fourth excitation winding 2212. The third excitation winding 2211 and the fourth excitation winding 2212 are gradually transitioned from the arc-shaped wire with the largest radius to the arc-shaped wire with the smallest radius, and the arc-shaped wire is concentrated in the area between the inner hole and the outer periphery of the seventh circuit board 2213 or the eighth circuit board 2214, so as to maximize the generation of an effective excitation magnetic field in the area. The seventh circuit board 2213 is provided with a sixth connection hole 22141, which is located on the arc-shaped wire path with the smallest radius, so that one end of the third excitation winding 2211 passes through the fifth connection hole 22131 and then passes through the sixth connection hole 22141 to connect with the fourth excitation winding 2212. In addition, one end of the third excitation winding 2211 is connected to one end of the fourth excitation winding 2212, and the other end of the third excitation winding 2211 is connected to the fifth electrical connection part 22132. The other end of the second excitation winding 1212 is connected to the sixth electrical connection part 22142. In addition, the first excitation winding 1211 is connected in series or in parallel to the second excitation winding 1212. The magnetic fields generated by the first excitation winding 1211 and the second excitation winding 1212 are both axial magnetic fields, and there is a mutually reinforcing relationship between the two excitation magnetic fields. It should be noted that the centers of the stator excitation winding 121 and the rotor excitation winding 221 are coaxially provided.

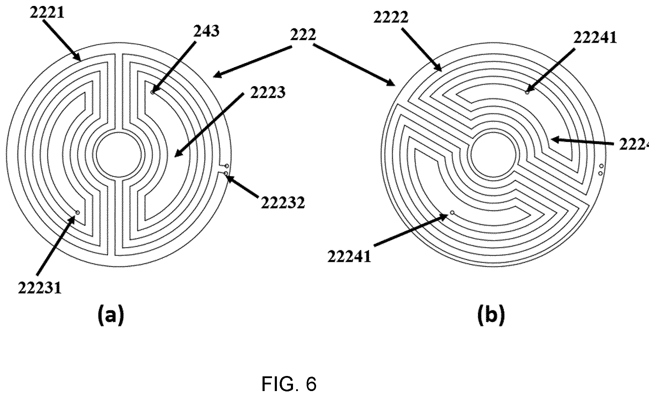

In an embodiment, the rotor angle winding 222 includes a fifth angle winding 2221 (a in FIG. 6), a sixth angle winding 2222 (b in FIG. 6) and a ninth circuit board 2223. The fifth angle winding 2221 is provided on the ninth circuit board 2223. The ninth circuit board 2223 is provided with a seventh connection hole 22231 and a seventh electrical connection part 22232. The fifth angle winding 2221 is connected to the seventh electrical connection part 22232. The fifth angle winding 2221 is electrically connected to the sixth angle winding 2222 through the seventh connection hole 22231. The seventh electrical connection part 22232 is electrically connected to the sixth electrical connection part 22142. The fifth angle winding 2221 (a in FIG. 6) and the sixth angle winding 2222 (b in FIG. 6) are provided on the side surface of the ninth circuit board 2223, or are printed on both side surfaces of the ninth circuit board 2223, respectively.

In an embodiment, referring to FIG. 6, the rotor angle winding 222 includes the fifth angle winding 2221 (a in FIG. 6), the sixth angle winding 2222 (b in FIG. 6), the ninth circuit board 2223 and a tenth circuit board 2224. The fifth angle winding 2221 is provided on the side surface of the ninth circuit board 2223, and the ninth circuit board 2223 is provided with a seventh connection hole 22231 and a seventh electrical connection part 22232. The fifth angle winding 2221 is connected to the seventh electrical connection part 22232. The tenth circuit board 2224 is located on one side of the ninth circuit board 2223. The sixth angle winding 2222 is provided on the side surface of the tenth circuit board 2224. The tenth circuit board 2224 is provided with an eleventh connection hole 22241, and the fifth angle winding 2221 is electrically connected to the sixth angle winding 2222 through the seventh connection hole 22231 and the eleventh connection hole 22241. The seventh electrical connection part 22232 is electrically connected to the sixth electrical connection part 22142.

The fifth angle winding 2221 is printed on the ninth circuit board 2223, and the sixth angle winding 2222 is printed on the tenth circuit board 2224. The fifth angle winding 2221 and the sixth angle winding 2222 are both composed of multiple sections of semi-arc wires, which gradually transition from the arc wire with the largest radius to the arc wire with the smallest radius. The ninth circuit board 2223 is provided with a seventh connection hole 22231, and the seventh connection hole 22231 is located on the arc wire path with the smallest radius. One end of the fifth excitation winding passes through the seventh connection hole 22231 and is electrically connected to the sixth excitation winding. The seventh electrical connection part 22232 is electrically connected to the rotor excitation winding 221, so that the stator angle winding 122 can receive the excitation current provided by the rotor excitation winding 221, and generate an axial alternating magnetic field related to the rotor angle information in the air gap 3.

In an embodiment, the electromagnetic structure for the angle sensor includes M groups of stator excitation windings 121 and N groups of stator angle windings 122, where M and N are both positive integers. A second angle difference is set between different stator angle windings 122; a third angle difference is set between the first angle winding 12211 and the second angle winding 12212; and a fourth angle difference is set between the third angle winding 12221 and the fourth angle winding 12222. The electromagnetic structure for the angle sensor includes P groups of rotor excitation windings 221 and Q groups of rotor angle windings 222, where P and Q are both positive integers. There is a fifth angle difference between different rotor angle windings, and there is a sixth angle difference between the fifth angle winding and the sixth angle winding.

In order to make the back electromotive force induced by the stator angle winding 122 have smaller high-order harmonics, the fifth angle winding and the sixth angle winding can be staggered according to the high-order harmonics that need to be eliminated to form the sixth angle difference. For example, to eliminate the third harmonic, the fifth angle winding and the sixth angle winding are staggered by a rotation angle of 60°.

In order to make the back electromotive force induced by the stator angle winding 122 have smaller higher harmonics, the first angle winding 12211 and the second angle winding 12212 can be staggered according to the higher harmonics that need to be eliminated and form the third angle difference, and the third angle winding 12221 and the fourth angle winding 12222 can be staggered by the fourth angle difference according to the higher harmonics that need to be eliminated. For example, to eliminate the fifth harmonic, the first angle winding 12211 and the second angle winding 12212 are staggered by a rotation angle of 36°, and the third angle winding 12221 and the fourth angle winding 12222 are staggered by a rotation angle of 36°.

In many applications, the back electromotive force of the stator signal winding is sensitive to a certain high-order harmonic. The high-order harmonic can be eliminated by adding a new set of stator angle windings 122 or rotor angle windings 222. The added angle windings are spatially offset from the original stator angle windings 122 or rotor angle windings 222. When the new and old sets of angle windings are connected in series, the fundamental wave components of the back electromotive force of the two sets of windings are increased due to superposition, but the corresponding high-order harmonics are offset due to anti-phase.

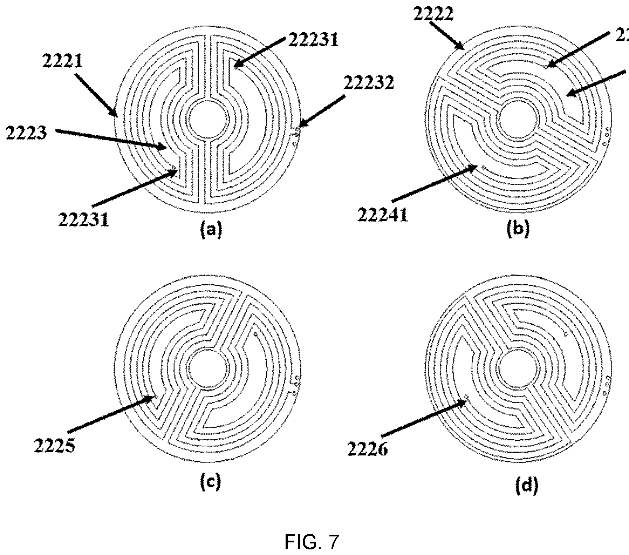

Harmonics greater than or equal to the seventh order can be eliminated by setting multiple groups of stator angle windings or multiple groups of rotor angle windings. There is the second angle difference between different stator angle windings 122, and there is the fifth angle difference between different rotor angle windings. Here, the rotor angle winding 222 is used as an example for explanation. Referring to FIG. 7, for example, the electromagnetic structure for the angle sensor includes two groups of rotor angle windings 222, the fifth angle winding 2221 and the sixth angle winding 2222 in one group are original rotor angle windings 222, and the seventh angle winding 2225 and the eighth angle winding 2226 in the other group are new rotor angle windings 222. The topological structure of the new rotor angle winding 222 is the same as that of the original rotor angle winding 222. In order to eliminate the 7th harmonic of the back electromotive force of the stator angle winding 122, the original rotor angle winding 222, composed of the fifth angle winding 2221 and the sixth angle winding 2222, is spatially separated from the new rotor angle winding 222, composed of the seventh angle winding 2225 and the eighth angle winding 2226, by an angle of 25.71429° (180°/7). In this way, the 7th harmonic magnetic field in the air gap 3 is eliminated, and the 7th harmonic magnetic field in the stator angle winding 122 is also eliminated, that is, the second angle difference can be 25.71429°. The sixth angle difference between the seventh angle winding 2225 and the eighth angle winding 2226 is equal to the second angle difference between the fifth angle winding 2221 and the sixth angle winding 2222.

If it is necessary to eliminate the 11th harmonic, an additional set of ninth angle winding and tenth angle winding is added as a new rotor angle winding 222. The original rotor angle winding 222, composed of the fifth angle winding 2221 and the sixth angle winding 2222, is spatially separated from the new rotor angle winding 222, composed of the seventh angle winding 2225 and the eighth angle winding 2226, by an angle of 16.36364°(180°/11). The new rotor angle winding 222, composed of the seventh angle winding 2225 and the eighth angle winding 2226, is spatially separated from the another new rotor angle winding 222, composed of the ninth angle winding and the tenth angle winding, by an angle of 16.36364°.

Similarly, specific higher harmonics in the back electromotive force can also be eliminated by adding multiple groups of stator angle windings 122, that is, when the fifth angle difference is 25.71429°, the 7th harmonic magnetic field in the stator angle winding 122 can be eliminated.

In order to measure incremental angle, the number of magnetic pole pairs of the stator angle winding 122 and the rotor angle winding 222 can be a positive integer greater than 1, but the number of fundamental wave magnetic pole pairs of the stator angle winding 122 and the rotor angle winding 222 must be the same. Moreover, in order to eliminate the higher harmonics of the back electromotive force of more angle windings, the number of groups of the stator angle winding 122 or the rotor angle winding 222 can be increased, and the corresponding angle difference in space between each layer of windings can be made for the harmonics to be eliminated.

In an embodiment, the rotor core 21 and the stator core 11 are both made of ferromagnetic materials with a magnetic permeability greater than 100. Ferromagnetic materials with a magnetic permeability greater than 100 are also called soft magnetic materials with high magnetic permeability, for example, silicon steel sheets or ferrite soft magnetic materials can be used. The magnetic permeability reflects the responsiveness of the material to the magnetic field. The higher the magnetic permeability, the stronger the magnetic ability of the magnetic material, thereby improving the energy conversion rate of the electromagnetic structure for the angle sensor.

The number of tangential magnetic pole pairs of the rotor angle winding 222, the stator angle sine winding 1221 and the stator angle cosine winding 1222 is 1. Therefore, the magnetic field of the rotor angle winding 222 can be effectively connected to the stator angle winding 122. In order to improve the accuracy of the sensor, the number of magnetic pole pairs of the rotor angle winding 222 and the stator angle winding 122 can also be greater than 1 to achieve incremental angle measurement.

In addition, in order to make full use of the space of the electromagnetic structure for the angle sensor and the magnetic field generated by the winding, the stator core 11 and the rotor core 21 can also be changed into other forms. For example, the stator core 11 is provided with a first groove, and the first groove is used to put the stator excitation winding 121 and the stator angle winding 122. The rotor core 21 is provided with a second groove, and the second groove is used to put the rotor excitation winding 221 and the rotor angle winding 222, which can further make the electromagnetic structure for the angle sensor more compact. The stator angle winding 122 and the rotor angle winding 222 can be implemented in the form of distributed, centralized or wave windings.

In the technical solution of the present application, by stacking the stator core 11, the stator excitation winding 121, the stator angle winding 122, the rotor excitation winding 221 and the rotor angle winding 222, and forming an air gap 3 between the stator winding 12 and the rotor winding 22, the external power supply provides an excitation current to the stator excitation winding 121, so that the stator excitation winding 121 generates the alternating excitation magnetic field in the air gap 3. The alternating excitation magnetic field is connected to the rotor excitation winding 221 through the stator core 11 and the rotor core 21, and the induced potential is generated in the rotor excitation winding 221. Since the rotor excitation winding 221 is connected to the rotor angle winding 222, the alternating current is generated in the rotor angle winding 222, and the alternating magnetic field is generated in the air gap 3. The alternating magnetic field causes the stator angle winding 122 to generate an induced potential. Since the excitation winding composed of the stator excitation winding 121 and the rotor excitation winding 221 and the angle winding composed of the stator angle winding 122 and the rotor angle winding 222 share the air gap 3 in an area, the electromagnetic structure is more compact, thereby achieving the purpose of reducing the overall volume of the electromagnetic structure.

The present application also proposes an angle sensor, which includes an electromagnetic structure for the angle sensor. The specific structure of the electromagnetic structure for the angle sensor refers to the above-mentioned embodiment. Since the present sensor adopts all the technical solutions of the above-mentioned embodiments, it has at least all the beneficial effects brought by the technical solutions of the above-mentioned embodiments, which will not be repeated here.

In the installed angle sensor, the stator excitation winding 121, the stator angle winding 122, the rotor excitation winding 221 and the rotor angle winding 222 have the same central axis.

The electromagnetic structure for the angle sensor has an axial hole in the center, which is used to connect with the connection shaft of the sensor. The additional axial hole has the advantage of easy installation, and can also enable the stator excitation winding 121, the stator angle winding 122, the rotor excitation winding 221 and the rotor angle winding 222 to be coaxially installed.

The above descriptions are only some embodiments of the present application, and are not intended to limit the scope of the present application. All equivalent structural transformations made using the contents of description and drawings of the present application under the technical concept of the present application, or direct/indirect application in other related technical fields, are included in the scope of the present application.

## Claims

1. An electromagnetic structure for an angle sensor, **characterized by** comprising:
a stator assembly comprising a stator core and stator windings, wherein the stator windings are provided on a side of the stator core, and the stator windings comprise a stator excitation winding and a stator angle winding; and the stator excitation winding and the stator angle winding are stacked, and the stator excitation winding is configured to connect an external power supply; and
a rotor assembly comprising a rotor core and rotor windings, wherein the rotor windings are provided on a side of the rotor core, and the rotor windings are located on a side of the stator winding away from the stator core; an air gap is formed between the stator windings and the rotor windings, and the rotor windings comprise a rotor excitation winding and a rotor angle winding; and the rotor excitation winding and the rotor angle winding are stacked, and the rotor excitation winding is electrically connected to the rotor angle winding.

2. The electromagnetic structure for the angle sensor according to claim 1, wherein the stator excitation winding and the stator angle winding, and the rotor excitation winding and the rotor angle winding, are located in a same axial electromagnetic region but are provided on different layers of circuit boards; and/or
the stator angle winding comprises a stator angle sine winding and a stator angle cosine winding, and a first angle difference is set between the stator angle sine winding and the stator angle cosine winding.

3. The electromagnetic structure for the angle sensor according to claim 2, wherein the stator excitation winding comprises a first excitation winding, a second excitation winding and a first circuit board; the first excitation winding and the second excitation winding are both provided on the first circuit board, and the first circuit board is provided with a first connection hole and a first electrical connection part; one end of the first excitation winding is connected to the first electrical connection part, and the other end of the first excitation winding is electrically connected to one end of the second excitation winding through the first connection hole; and the other end of the second excitation winding is connected to the first electrical connection part, and the first electrical connection part is configured to connect an external power supply.

4. The electromagnetic structure for the angle sensor according to claim 2, wherein the stator angle sine winding comprises a first angle winding, a second angle winding and a third circuit board, and the first angle winding and the second angle winding are both provided on the third circuit board; the third circuit board is provided with a third connection hole and a third electrical connection part, and the first angle winding is connected to the third electrical connection part; and the first angle winding is electrically connected to the second angle winding through the third connection hole, and the second angle winding is electrically connected to the third electrical connection part; and
the stator angle cosine winding comprises a third angle winding, a fourth angle winding and a fifth circuit board, and the third angle winding and the fourth angle winding are both provided on a side surface of the fifth circuit board; the fifth circuit board is provided with a fourth connection hole and a fourth electrical connection part, and the third angle winding is connected to the fourth electrical connection part; and the third angle winding is electrically connected to the fourth angle winding through the fourth connection hole.

5. The electromagnetic structure for the angle sensor according to claim 4, wherein the rotor excitation winding comprises a third excitation winding, a fourth excitation winding and a seventh circuit board; the third excitation winding and the fourth excitation winding are both provided on the seventh circuit board, and the seventh circuit board is provided with a fifth connection hole and a fifth electrical connection part; one end of the third excitation winding is connected to the fifth electrical connection part, and the other end of the third excitation winding is electrically connected to one end of the fourth excitation winding through the fifth connection hole; and the other end of the fourth excitation winding is electrically connected to the fifth electrical connection part, and the fifth electrical connection part is electrically connected to the rotor angle winding.

6. The electromagnetic structure for the angle sensor according to claim 5, wherein the rotor angle winding comprises a fifth angle winding, a sixth angle winding and a ninth circuit board, and the fifth angle winding and the sixth angle winding are both provided on the ninth circuit board; the ninth circuit board is provided with a seventh connection hole and a seventh electrical connection part, and the fifth angle winding is connected to the seventh electrical connection part; and the fifth angle winding and the sixth angle winding are electrically connected to the sixth angle winding through the seventh connection hole.

7. The electromagnetic structure for the angle sensor according to claim 6, further comprising:
M groups of stator excitation windings and N groups of stator angle windings, M and N being both positive integers, wherein a second angle difference is set between different stator angle windings; a third angle difference is set between the first angle winding and the second angle winding, and a fourth angle difference is set between the third angle winding and the fourth angle winding; and
P groups of rotor excitation windings and Q groups of rotor angle windings, P and Q being both positive integers, wherein a fifth angle difference is set between different rotor angle windings, and a sixth angle difference is set between the fifth angle winding and the sixth angle winding.

8. The electromagnetic structure for the angle sensor according to any one of claims 1 to 7, wherein the rotor core and the stator core are both made of ferromagnetic material with a magnetic permeability greater than 100.

9. The electromagnetic structure for the angle sensor according to any one of claims 2 to 7, wherein the stator excitation winding comprises a ring-shaped winding surrounding from a center to an edge, and each of the stator angle winding and the rotor angle winding comprises two semi-ring-shaped windings symmetrically provided around the center.

10. An angle sensor, **characterized by** comprising the electromagnetic structure for the angle sensor according to any one of claims 1 to 9.
